# EUROPÄISCHE PATENTSCHRIFT

(11) **EP 2 686 583 B1**
(45) Veröffentlichungstag und Bekanntmachung des Hinweises auf die Patenterteilung: **20.05.2015**
(21) Anmeldenummer: 12700310.1
(22) Anmeldetag: 11.01.2012
(51) Int. Cl.: F16H 57/04, F16H 57/031

(54) **GETRIEBEVORRICHTUNG**
TRANSMISSION DEVICE
DISPOSITIF DE TRANSMISSION

(30) Priorität: 17.03.2011 DE 102011014377; 11.05.2011 CN 201120146859 U
(43) Veröffentlichungstag der Anmeldung: 22.01.2014
(73) Patentinhaber: Sew-Eurodrive GmbH & Co. KG, 76646 Bruchsal (DE)
(72) Erfinder: WU, Zili, 300060 Tianjin (CN)
(86) Internationale Anmeldenummer: PCT/EP2012/000099
(87) Internationale Veröffentlichungsnummer: WO 2012/123042

(56) Entgegenhaltungen:
- EP-A1- 1 253 349
- EP-A2- 1 610 031
- DE-A1- 3 209 514
- DE-A1-102009 005 887
- GB-A- 907 362
- US-A- 1 704 298
- US-A- 2 699 841
- US-A- 2 832 230

## Beschreibung

Die Erfindung betrifft eine Getriebevorrichtung.

Es ist allgemein bekannt, dass Getriebe Verzahnungsteile aufweisen, so dass im Betrieb Wärme erzeugt wird, die ans Getriebeöl zumindest teilweise abfließt.

Aus der US 2 832 230 A ist ein Getriebe mit vertikaler Abtriebswelle bekannt, das die Merkmale des Oberbegriffs von Anspruch 1 aufweist.

Aus der GB 907 362 A ist eine Verbesserung bei Getrieben bekannt.

Aus der DE 10 2009 005 887 A1 ist ein Spindelantrieb bekannt.

Aus der DE 32 09 514 A1 ist eine Getriebeanlage mit Druckschmierung bekannt.

Aus der US1 704 298 A ist eine Vorrichtung zur Wandlung einer ersten Drehgeschwindigkeit in eine zweite Drehgeschwindigkeit bekannt.

Aus der US 2 699 841 A ist eine Geschwindigkeitswechseleinheit bekannt mit Schmierungsvorrichtung hierfür.

Aus der EP 1 253 349 A1 ist ein Zahnradgetriebe mit integrierter Überlastkupplung bekannt.

Aus der EP 1 610 031 A2 ist eine Schmierung für eine Geschwindigkeitswechseleinrichtung bekannt.

Der Erfindung liegt daher die Aufgabe zugrunde, ein Getriebe kompakt weiterzubilden.

Erfindungsgemäß wird die Aufgabe bei der Getriebevorrichtung nach den in Anspruch 1 angegebenen Merkmalen gelöst.

Wichtige Merkmale der Erfindung bei der Getriebevorrichtung sind, dass die Getriebevorrichtung, insbesondere Getriebe, mit einem zentralen Gehäuseteil, in welchem ein erstes Lager, insbesondere unteres Lager, einer Welle der Getriebevorrichtung, insbesondere der abtreibenden Welle, aufgenommen ist,
wobei im zentralen Gehäuseteil ein Kanal vorgesehen ist, insbesondere ein aus radial und axial verlaufenden Bohrungsabschnitten zusammengesetzter Kanal,
wobei der Kanal von einer ersten Seite, insbesondere Oberseite, der Getriebevorrichtrung zum Bereich der Lageraufnahme des Lagers führt.

Von Vorteil ist dabei, dass die Fettschmierung in einfacher und kostengünstiger Weise ausführbar ist. Insbesondere muss nicht von der Seite des Lagers her eine Fettschmierung ausgeführt werden sondern es genügt die Fettschmierung von der anderen Seite her auszuführen.

Erfindungsgemäß ist das Lager fettgeschmiert, wobei die Nachschmierung durch Einleitung von Fett in den Mündungsberiech an der Oberseite der Getriebevorrichtung ausführbar ist,
insbesondere wobei im Mündungsbereich des Kanals ein Anschlussmittel für Fettschmierung, insbesondere Druckschmierung, angeordnet ist. Von Vorteil ist dabei, dass eine Wartungsschmierung in einfacher Weise ausführbar ist, wobei nach Beendigung der Wartungsschmierung der Fettkanal verschlossen bleibt und somit das Eindringen von Schmutz verhindert ist.

Erfindungsgemäß ist die Welle über ein zweites Lager gelagert, insbesondere dessen Lageraufnahme im zentralen Gehäuseteil angeordnet ist, wobei das zweite Lager axial zwischen der Mündung des Kanals auf der ersten Seite und dem Lager angeordnet ist. Von Vorteil ist dabei, dass die Fettschmierung auf der vom Lager abgewandten Seite des Getriebes ausführbar ist.

Bei einer vorteilhaften Ausgestaltung ist Lageraufnahmebereich des ersten Lagers im zentralen Gehäuseteil auf der der ersten Seite gegenüberliegenden Seite angeordnet, also einen Abschnitt der dortigen Außenwand der Getriebevorrichtung umfasst. Von Vorteil ist dabei, dass der Fettschmierkanal im zentralen Gehäuseteil geführt ist, also keine zusätzlichen Rohrelemente benötigt werden und die Schmierung eines Lagers ermöglicht ist, das auf einer schwer zugänglichen Seite des Getriebes angeordnet ist.

Bei einer vorteilhaften Ausgestaltung weist die Getriebevorrichtung ein zentrales Gehäuseteil auf, welches ein Lager einer abtreibenden und ein Lager einer eintreibenden Welle (4) aufnimmt,
wobei im Getriebegehäuse ein Öltank angeordnet ist, der zumindest teilweise begrenzt ist durch das zentrale Gehäuseteil.

Von Vorteil ist dabei, dass im unteren Teil des Getriebes ein Öltank vorgesehen ist, in welchem das Öl sich ansammelt und somit ein Ansaugrohr einer Ölpumpe ständig mit Öl versorgbar ist, also das Ansaugen von Luft vermieden wird. Außerdem ermöglicht der Öltank die Beruhigung von Ölschaum, also die Separation von Luft und Öl. Der Öltank ist im Getriebe integriert, da er durch das zentrale Gehäuseteil zumindest teilweise begrenzt ist. Außerdem ist er in einem Beriech des Getriebes vorsehbar, wo keine Funktionsteile sind, also kein Raumbereich für die Funktion des Getriebes benötigt werden.

Erfindungsgemäß ist die Getriebevorrichtung derart montierbar in einer Maschine oder Anlage, insbesondere Kühlturmanlage, dass die abtreibende Welle nach unten, also in Gravitationsrichtung, herausragt aus dem Gehäuse der Getriebevorrichtung. Von Vorteil ist dabei, dass am nach unten herausragenden Endbereich ein Lüfter eines Kühlturms antreibbar ist und somit die Unterseite dem Luftstrom dieses Lüfters aussetzbar ist. Außerdem ist das untere Lager der abtreibenden Welle fettschmierbar und mittels Labyrinthdichtung abdichtbar.

Bei einer vorteilhaften Ausgestaltung ist der Öltank durch das zentrale Gehäuseteil und ein mit diesem dicht verbundenen Gehäusedeckel begrenzt. Von Vorteil ist dabei, dass der Öltank durch dichtes Verbinden, insbesondere Schraubverbinden, des Gehäusedeckels mit dem zentralen Gehäuseteil herstellbar ist.

Bei einer vorteilhaften Ausgestaltung ist der Öltank über einen Kanal mit einer Ölpumpe verbunden, wobei der Kanal als Ausnehmung im zentralen Gehäuseteil ausgebildet ist, insbesondere wobei der Kanal aus Bohrungsabschnitten, insbesondere axial, also parallel zur Achsrichtung der abtreibenden Welle, und hierzu transversal verlaufenden Bohrungsabschnitten, zusammengesetzt ist. Von Vorteil ist dabei, dass die Kanäle in einfacher Weise herstellbar sind. Außerdem sind die Kanäle im zentralen Gehäuseteil integriert ausgebildet und es ist keine separate Verrohrung zur Ölführung notwendig. Das Öl ist also innerhalb des zentralen Gehäuseteils geführt und temperiert somit auch direkt das zentrale Gehäuseteil. Durch thermische Unterschiede, also unterschiedliche Temperaturen an verschiedenen Positionen des Gehäuseteils, bedingte Spannungen werden also vermindert.

Bei einer vorteilhaften Ausgestaltung sind im zentralen Gehäuseteil Kanäle ausgebildet, die vom Getriebeinnenraum in den Öltank münden,
insbesondere wobei die Kanäle jeweils aus Bohrungsabschnitten, insbesondere axial, also parallel zur Achsrichtung der abtreibenden Welle, und hierzu transversal verlaufenden Bohrungsabschnitten, zusammengesetzt sind. Von Vorteil ist dabei, dass in einfacher Weise ein Rückfluss des Öls in den Öltank erreichbar ist.

Bei einer vorteilhaften Ausgestaltung verläuft im zentralen Gehäuseteil ein Kanal von der Ölpumpe an die Oberseite der Getriebevorrichtung, wobei der Mündungsbereich von einem Lagerdeckel abgedeckt ist, der auch die Stirnseite eines der axialen Endbereiche der abtreibenden Welle abdeckt, und in einen Raumbereich, insbesondere Öltasche, mündet, der zumindest vom zentralen Gehäuseteil und vom Lagerdeckel begrenzt ist. Von Vorteil ist dabei, dass eine schmale Öltasche gebildet ist, die von dem dünnen Lagerdeckel geschützt ist und von Öl durchströmt ist. Somit ist eine hervorragende und effektive Kühlung des Öls erreichbar.

Bei einer vorteilhaften Ausgestaltung führen aus dem Raumbereich Kanäle zu zu schmierenden und/oder zu kühlenden Bereichen im Innenraum der Getriebevorrichtung, insbesondere zu einem Lager und/oder zu einem Bereich von miteinander im Eingriff stehenden Verzahnungen. Von Vorteil ist dabei, dass das gekühlte Öl den Bereichen zur Schmierung und Kühlung zuführbar ist.

Bei einer vorteilhaften Ausgestaltung ist auf der eintreibenden Welle ein Lüfter formschlüssig und/oder kraftschlüssig verbunden, dessen Kühlluftstrom am Lagerdeckel vorbeiströmt, insbesondere wobei der Kühlluftstrom durch Ausnehmungen eines Laternenflansch durchtritt, insbesondere in zur eintreibenden Welle radialer Richtung, insbesondere wobei der Laternenflansch mit dem Gehäuse, insbesondere mit dem zentralen Gehäuseteil der Getriebevorrichtung verbunden ist und an seiner von der Getriebevorrichtung abgewandten Seite mit einem Motorgehäuse verbunden ist. Von Vorteil ist dabei, dass eine effektive Kühlung bewirkbar ist.

Erfindungsgemäß ist das zentrale Gehäuseteil zweistückig ausgeführt, wobei zumindest ein Kanal vom oberen Stück ins untere Stück durchgeführt ist. Von Vorteil ist dabei, dass die beiden Stücke dicht verbunden sind und somit Öl durchführbar ist. Vorzugswiese wird eine Dichtung im Verbindungbereich des oberen und unteren Stücks angeordnet.

Bei einer vorteilhaften Ausgestaltung weist das untere Stück des zentralen Gehäuseteils an seiner Unterseite Kühlrippen auf, insbesondere wobei an einer den Öltank zumindest teilweise begrenzenden Wand des unteren Stücks Kühlrippen ausgebildet sind und/oder wobei an einer die Lageraufnahme zumindest teilweise begrenzenden Wand des unteren Stücks Kühlrippen ausgebildet sind. Von Vorteil ist dabei, dass eine besonders effektive Kühlung des Öltanks und des abtriebsseitigen Lagers bewirkbar ist. Außerdem sind die Kühlrippen an der Unterseite dem Kühlluftstrom des auf der abtreibenden Welle vorgesehenen Lüfters ausgesetzt und somit eine effektive Kühlung erreichbar.

Bei einer vorteilhaften Ausgestaltung ist an der Oberseite des oberen Stücks eine wellenartige Struktur als oberflächenvergrößernder Bereich ausgebildet. Von Vorteil ist dabei, dass eine verbesserte Kühlung erreichbar ist.

Bei einer vorteilhaften Ausgestaltung ist an der Außenseite des Lagerdeckels eine wellenartige Struktur als oberflächenvergrößernder Bereich ausgebildet, die im Kühlluftstrom des Lüfters angeordnet ist. Von Vorteil ist dabei, dass eine verbesserte Kühlung erreichbar ist.

Bei einer vorteilhaften Ausgestaltung ist ein Gehäusedeckel mit dem unteren und dem oberen Stück des zentralen Gehäuseteils verbunden, wobei der Gehäusedeckel seitlich angeordnet ist und/oder eine wellenartige Struktur als oberflächenvergrößernder Bereich aufweist. Von Vorteil ist dabei, dass eine verbesserte Entwärmung und eine leichtere Montage des Getriebes ermöglicht ist.

Bei einer vorteilhaften Ausgestaltung ist im zentralen Gehäuseteil ein Kanal vorgesehen, insbesondere ein aus radial und axial verlaufenden Bohrungsabschnitten zusammengesetzter Kanal,
wobei der Kanal vom oberen Stück ins untere Stück durchgeführt ist,
wobei der Kanal von der Oberseite zum Bereich des unteren Lagers der abtreibenden Welle führt, welches fettgeschmiert ist, wobei die Nachschmierung durch Einleitung von Fett in den Mündungsberiech an der Oberseite der Getriebevorrichtung ausführbar ist. Von Vorteil ist dabei, dass der Kanal bei zweistückiger Ausführung vom oberen ins untere Stück übergeht und eine Druckschmierung mit Fett ausführbar ist. Dabei ist vorteiligerweise die Verbindung vom Kanalabschnitt des oberen zum Kanalabschnitt des unteren Stücks des zentralen Gehäuseteils dicht ausgeführt.

Bei einer vorteilhaften Ausgestaltung ist am zentralen Gehäuseteil, insbesondere an einem Eckbereich des quaderförmig ausgebildeten unteren Stücks, insbesondere am unteren Stück, ein Befestigungsbereich einstückig ausgeformt, der derart in seitlicher, also radialer Richtung, sich erstreckt, dass eine in axialer Richtung verlaufende durchgehende Bohrung eingebracht ist, so dass eine Verbindungsschraube in axialer Richtung durchführbar und mit einem festen Teil der die Getriebevorrichtung aufnehmenden Anlage oder Maschine verbindbar ist. Von Vorteil ist dabei, dass ein vergrößerter Bereich für die Befestigung des Getriebes an einem festen Teil ermöglicht ist.

Die Erfindung wird nun anhand von schematischen Abbildungen näher erläutert:

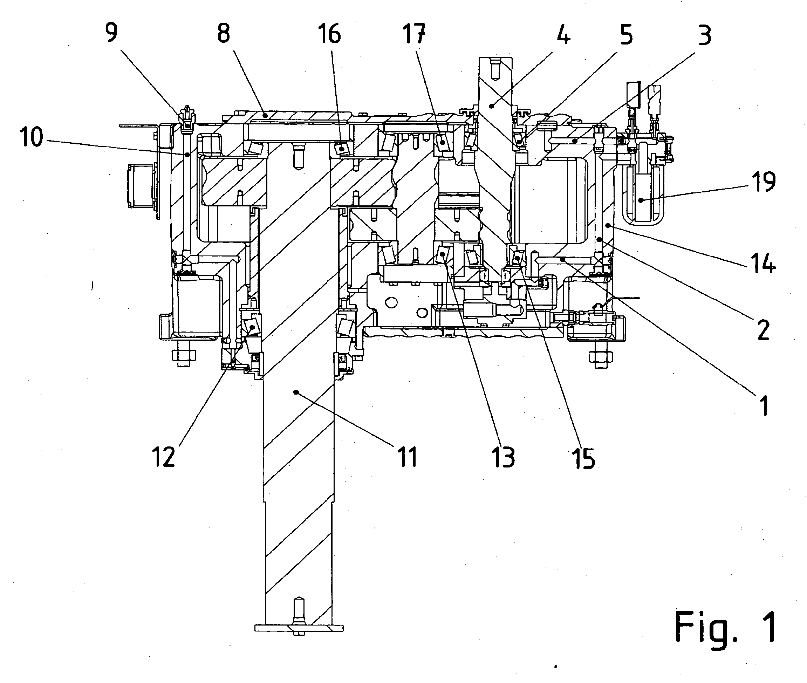

In der Figur 1 ist ein Querschnitt durch ein erfindungsgemäßes Getriebe gezeigt, wobei ein eintriebsseitiger Laternenflansch und ein von ihm gehäusebildend umgebene, auf der eintreibenden Welle vorgesehene Lüfter ausgeblendet sind.

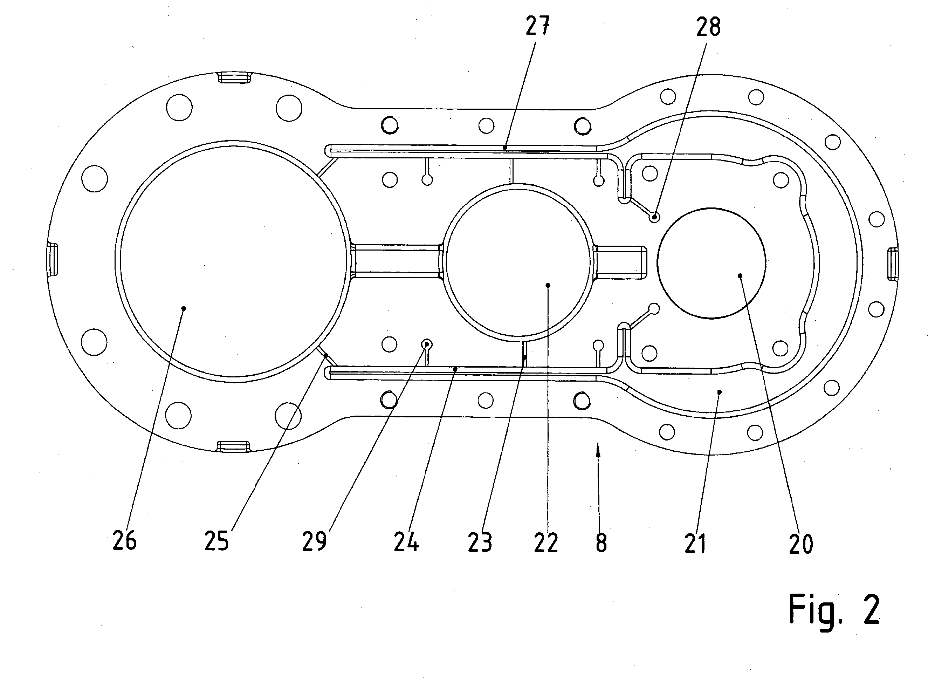

In der Figur 2 ist die eine Draufsicht auf die Innenseite des Lagerdeckels 8 gezeigt.

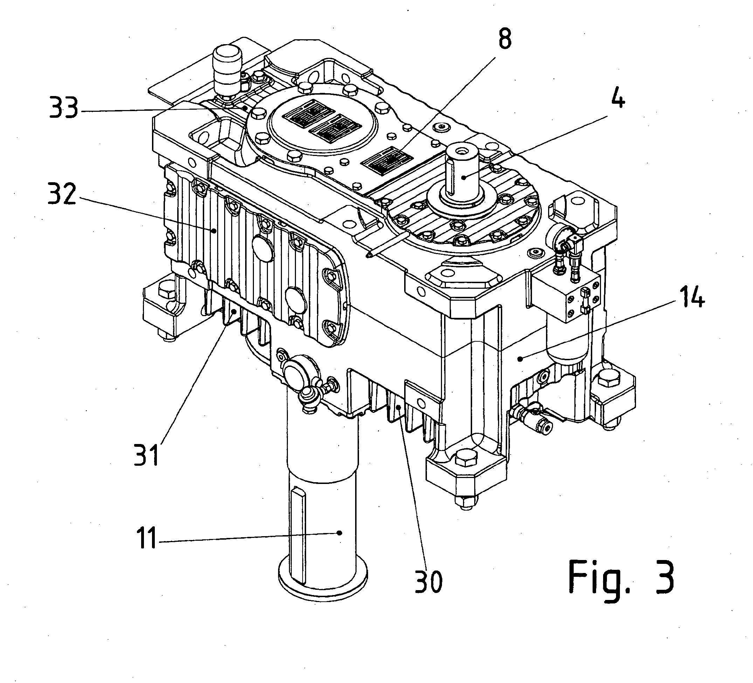

In der Figur 3 ist eine Schrägansicht auf das Getriebe gezeigt.

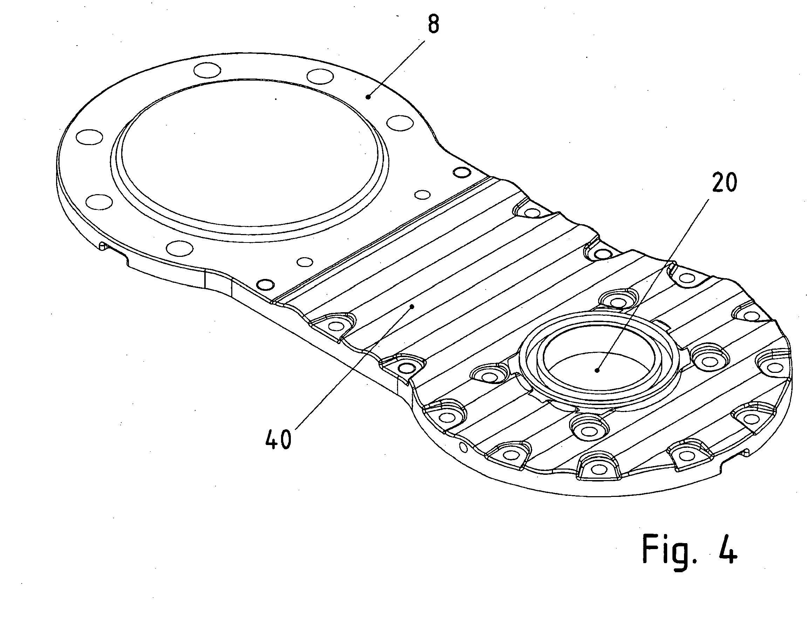

In der Figur 4 ist eine Schrägansicht auf die Außenseite des Lagerdeckels 8 gezeigt.

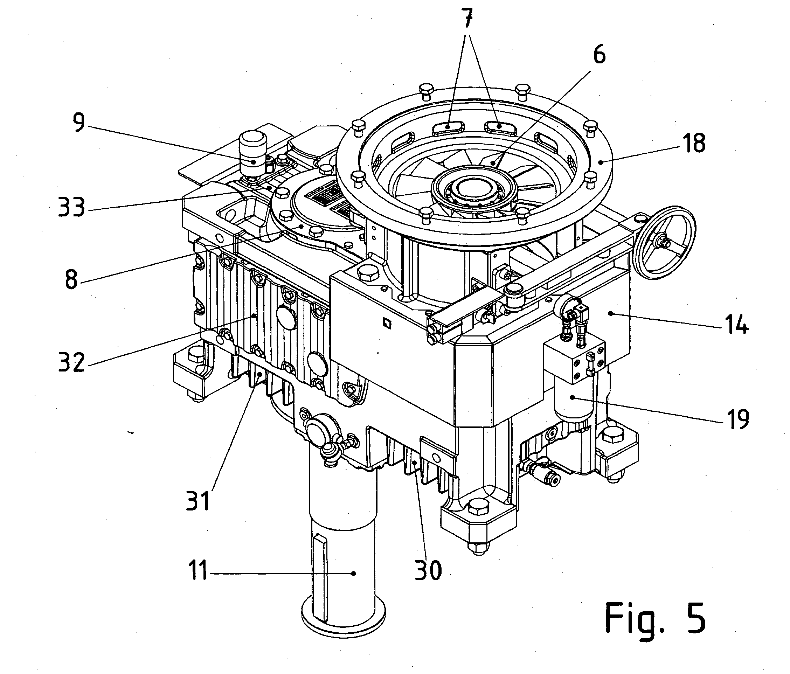

In der Figur 5 ist eine Schrägansicht auf die Außenseite des erfindungsgemäßen Getriebes gezeigt, wobei der eintriebsseitige Laternenflansch und der von ihm gehäusebildend umgebene, auf der eintreibenden Welle vorgesehene Lüfter dargestellt sind.

Dabei ist ein zentrales Gehäuseteil 14 vorgesehen, welches Lager der Wellen des Getriebes aufnimmt und an Bereichen seiner Außenoberfläche Kühlrippen und oberflächenvergrößernde wellenartige Ausformungen aufweist.

Die eintreibende Welle 4 ist über ein Lager 5 und ein Lager 15 im zentralen Gehäuseteil 14 gelagert und weist axial zwischen den Lagern 5 und 15 eine Ritzelverzahnung auf. Alternativ ist dort auch ein eintreibendes Verzahnteil kraftschlüssig und/oder formschlüssig verbindbar.

Diese Ritzelverzahnung beziehungsweise dieses Verzahnteil ist im Eingriff mit einem Verzahnteil einer Zwischenwelle, die über Lager (5, 13) ebenfalls im zentralen Gehäuseteil 14 aufgenommen ist. Dabei befindet sich das Verzahnteil der Zwischenwelle und ein weiteres Verzahnteil der Zwischenwelle axial wiederum zwischen den Lagern (5, 13).

Das weitere auf der Zwischenwelle kraftschlüssig und/oder formschlüssig verbundene Verzahnteil steht im Eingriff mit einem Verzahnteil, das kraftschlüssig und/oder formschlüssig mit der abtreibenden Welle 11 verbunden ist.

Vorzugsweise ist die Bauform, also die Ausrichtung des Getriebes in der das Getriebe umfassenden Maschine oder Anlage derart, dass die abtreibende Welle nach unten, also in Gravitationsrichtung, herausragt.

Die abtreibende Welle ist über ein unteres Lager 12 und ein oberes Lager 16 im zentralen Gehäuseteil 14 gelagert.

Im axialen Bereich des unteren Lagers 12 ist eine Fettschmierung vorgesehen. Hierzu sind Bohrkanäle 10 im zentralen Gehäuseteil 14 ausgeführt, so dass ein Kanal von der Oberseite zum axialen Bereich des unteren Lagers gebildet ist. Der Kanal 10 mündet an der Oberseite über eine Anschlussvorrichtung für Fettschmierung, die auch verschließbar ist. Auf diese Weise ist bei Wartung des Getriebes Fett unter Druck einbringbar und somit der axiale Bereich des Lagers auf der unteren Seite in komfortabler Weise von der anderen Seite des Getriebes, also der Oberseite, aus versorgbar. Daher darf das Getriebe in eine derartige Maschine oder Anlage eingebaut werden" in welcher die Unterseite unzugänglich ist. Trotzdem ist eine Wartungsschmierung in einfacher Weise ermöglicht. Insgesamt ist der Kanal 10 aus axial und radial verlaufenden Teilabschnitten zusammengesetzt, die jeweils als Bohrungen ausgeführt sind, wobei bei durchgehenden Bohrungen die jeweils ungenutzten Endbereiche der Bohrungen verschlossen sind, vorzugsweise mit einem Verschlussstopfen.

An der Oberseite ist ein Lagerdeckel 8 vorgesehen, welcher die Lageraufnahmebereiche der Lager 5, 16 und 17 abdeckt, wobei im vom Lagerdeckel 8 abgedeckten Oberflächenbereich des zentralen Gehäuseteils 14 eine Nutenstruktur eingearbeitet ist, so dass nach Aufsetzen des Lagerdeckels 8 Kanäle zum Durchleiten des Öls gebildet sind. Außerdem ist in dem abgedeckten Oberflächenbereich auch eine großflächige Vertiefung ausgebildet, so dass ein flacher Raumbereich zur Aufnahme von Öl gebildet ist, in welchen die Kanäle münden.

Alternativ oder zusätzlich ist die Nutenstruktur und die flächige Ausnehmung auch auf der Innenseite des Lagerdeckels 8 ausgebildet.

Dabei weist der Lagerdeckel 8 eine Ausnehmung 20 zur Durchführung der eintreibenden Welle auf, so dass oberhalb des zentralen Gehäuseteils 14 an der eintreibenden Welle ein Lüfter 6 verbunden, insbesondere kraftschlüssig und/oder formschlüssig, ist. Somit ist dieser Lüfter 6 in einem Gehäuseteil gehäusebildend umgeben, das als Laternenflansch 18 mit radial nach außen gerichteten Ausnehmungen 7 ausgebildet ist und auf das zentrale Gehäuseteil 14 aufgesetzt und verbunden ist.

Der vom Lüfter 6 erzeugte Luftstrom strömt am Lagerdeckel 8 vorbei, das an seiner Außenseite eine oberflächenvergrößernde wellige Kühlstruktur aufweist. Somit wird das an der Innenseite des Lagerdeckels 8 vorhandene Öl beim Durchströmen des flächigen Raumbereichs 21, insbesondere also eines taschenartigen Raumbereichs, gekühlt.

Der Lagerdeckel 8 ist im Bereich der Stirnseiten der Zwischenwelle und der abtreibenden Welle geschlossen ausgeführt und stellt somit eine Abdeckung 22 des Wellenendes der Zwischenwelle und Abdeckung 26 der abtreibenden Welle dar.

Aus dem Raumbereich 21 führen Ölkanäle 24 und 27 heraus und sind verbunden mit den Nuten (23, 25, 28, 29) zur Ölführung, mittels welcher Öl zu den Lagern der Abtriebswelle, der Zwischenwelle und/oder der eintreibenden Welle geführt wird, so dass diese stets ausreichend geschmiert sind, insbesondere beim Anlaufen des Getriebes.

Somit ist der dünnwandig ausgeführte Lagerdeckel 8 als Kühlkörper wirksam, da er auf der Oberseite des Getriebes angeordnet ist und somit dem Kühlluftstrom des auf der eintreibenden Welle oder in einem anderen Ausführungsbeispiel alternativ auf einer Zwischenwelle angeordneten Lüfters ausgesetzt. Durch die Ausbildung des düsenartig ausgeformten Laternenflansches ist ein besonders geringer Strömungswiderstand erreichbar. Die Öffnungen für den Luftdurchtritt sind seitlich angebracht, also in radialer Richtung, so dass die durchtretendes Luft nicht auf die antreibende Vorrichtung, insbesondere also Elektromotor, trifft.

Am zentralen Gehäuseteil 14 sind Wände ausgebildet, die den Öltank begrenzen. Durch den Öltank, der eine geringere Grundfläche aufweist als das Getriebe, insbesondere eine Grundfläche, die weniger als 30% der Grundfläche des Getriebes beträgt, ist es ermöglicht, dass insbesondere auch bei Stillstand des Getriebes das Öl sich im Öltank sammelt und daher ein hoher Ölstand erreichbar ist. Somit ist ein Ansaugrohr einer Ölpumpe 19 stets unter dem Ölstand, also unterhalb der Oberfläche des im Öltank sich befindenden Öls. Ein Ansaugen von Luft ist somit vermieden.

Vom Öltank zur Ölpumpe ist als Ansaugrohr ein Kanal im zentralen Gehäuseteil 14 angeordnet, der aus den Abschnitten 1 und 2 zusammengesetzt ist. Ausgangsseitig ist die Ölpumpe 19 an den Kanal 3 angeschlossen, der in durch die Ausnehmung im Lagerdeckel 8 gebildete Öltasche 21 mündet. Somit wird das warme Öl von der Ölpumpe 19 am Lagerdeckel 8 vorbeigeführt und dabei gekühlt.

Eine der Wände des Öltanks weist Aufnahmen für ein Lager der eintreibenden Welle und ein Lager der Zwischenwelle auf. In der Wand, die vorzugsweise die Oberseite des Öltanks darstellt, und/oder im zentralen Gehäuseteil 14 sind Kanäle eingearbeitet, insbesondere als Bohrungen, so dass Öl aus dem Getriebeinnenraum in den Öltank abfließt. Insbesondere bei Stillsetzen des Getriebes fließt das Öl in den Öltank.

Den Öltank begrenzende Seitenwände weisen an ihrer Außenseite Kühlrippen 30 auf, so dass eine Entwärmung des Öls im Öltank effektiv ermöglicht ist. Die Unterseite des Öltanks ist durch einen mit dem zentralen Gehäuseteil 14 dicht verbundenen Deckel gebildet. Dieser Deckel weist an seiner Außenseite eine oberflächenvergrößernde Welligkeit auf, so dass auch hierdurch die Entwärmung des Öls im Öltank verbessert ist.

Weitere Kühlrippen 31 sind am zentralen Gehäuseteil vorgesehen im Bereich der Lageraufnahme des Lagers 12 der abtreibenden Welle 11.

Somit ist einerseits das Gehäuse des Getriebes möglichst kompakt ausgeführt, wobei durch die Kühlrippenstrukturen und oberflächenvergrößernde Maßnahmen im Wesentlichen ein quaderförmiges Raumvolumen erreicht wird.

Durch die im zentralen Gehäuseteil 14 eingebrachten Bohrungen, welche als Ölkanäle wirksam sind, ist eine verbesserte Wärmeabfuhr vom Öl ans Gehäuse und von dort an die Umgebung erreicht. Insbesondere ist das Öl und das zentrale Gehäuseteil 14 auf möglichst gleichem Temperaturniveau.

Das untere Lager 12 der abtreibenden Welle ist in einer Lageraufnahme des zentralen Gehäuseteils 14 aufgenommen, wobei ein Teilbereich der Lageraufnahme auch eine Wand für den Öltank bildet, also diesen zumindest teilweise begrenzt.

Das zentrale Gehäuseteil ist vorzugsweise zweistückig ausgeführt. Somit sind im unteren Stück die Lageraufnahmen für die Lager (12, 13, 15) und der Öltank angeordnet und im oberen Stück die Lageraufnahmen für die Lager (5, 16, 17), die mittels des auf das obere Stück verbundenen Lagerdeckels 8 abgedeckt sind. Außerdem ist der Laternenflansch auf das obere Stück gesetzt und verbunden.

Das obere Stück des zentralen Gehäuseteils 14 weist an seiner Oberseite einen Bereich mit wellenartiger Ausbreitung auf, so dass auch hier eine oberflächenvergrößernde Struktur vorgesehen ist. Dieser Bereich ist an der Außenseite des Bereichs der Lageraufnahme für das obere Lager 16 angeordnet.

Ein Gehäusedeckel 32 deckt eine Öffnung im zentralen Gehäuseteil ab, so dass eine einfachere Montage ausführbar ist. Dieser Gehäusedeckel 32 weist ebenfalls eine wellenartige äußere Oberfläche als oberflächenvergrößernde Struktur auf.

Wichtig ist dabei auch, dass am unteren Stück des zentralen Gehäuseteils 14 Kühlrippen (30, 31) ausgebildet sind, wobei diese auch auf der Unterseite des Stücks angeordnet sind. Somit ist es ermöglicht, dass die abtreibende Welle 11 einen Lüfter antreibt und der in axialer Richtung angetriebene Luftstrom dann auf die Kühlrippen (30, 31) trifft. Hierdurch ist eine effektive Kühlung der Unterseite des Getriebes ermöglicht und somit insbesondere eine effektive Kühlung des im Öltank sich befindenden Öls und des unteren Lagers der abtreibenden Welle. Der abtriebsseitig erzeugte Luftstrom gelangt aber nur in geringem Umfang an die Oberseite. Daher ist an der eintreibenden Welle der Lüfter 6 aufgesetzt und kühlt den Lagerdeckel 8, so dass das an der Innenseite des Lagerdeckels 8 vorbeiströmende Öl gekühlt wird. Das im Öltank an der unteren Seite und vom Lagerdeckel an der Oberseite gekühlte Öl strömt dann den Lagern und den zu schmierenden Teilen des Getriebes, insbesondere auch den miteinander im Eingriff stehenden Verzähnungsbereichen zu und kühlt diese auch.

Bei weiteren erfindungsgemäßen Ausführungsbeispielen ist die Ölpumpe 19 zusätzlich in Reihe geschaltet mit einem Ölfilter, so dass metallischer Abrieb aus dem Öl herausfilterbar ist. Alternativ oder zusätzlich ist auch im Getriebe, insbesondere im Öltank des Getriebes ein Filter und/oder ein Dauermagnet anordenbar, so dass die metallischen, insbesondere magnetisierbaren, Partikel dort herausfilterbar sind. Zusätzlich oder alternativ sind die vom Getriebeinneren in den Öltank führenden Kanäle mit einem derart geringen Querschnitt ausgeführt, dass entsprechend zu große Partikel herausgefiltert werden. Somit sind die Kanäle als Filterstruktur wirksam.

### Bezugszeichenliste

- 1: Ölkanalabschnitt
- 2: Ölkanalabschnitt
- 3: Ölkanalabschnitt
- 4: eintreibende Welle
- 5: Lager
- 6: Lüfter
- 7: Ausnehmungen, insbesondere Luftdurchtrittsöffnungen im Laternenflansch
- 8: Lagerdeckel
- 9: Anschlussvorrichtung für Fettschmierung
- 10: Bohrung als Fettkanal
- 11: abtreibende Welle
- 12: Lager
- 13: Lager
- 14: zentrales Gehäuseteil
- 15: Lager
- 16: Lager
- 17: Lager
- 18: Gehäuseteil, insbesondere Laternenflansch
- 19: Ölpumpe
- 20: Ausnehmung zur Durchführung der eintreibenden Welle
- 21: Öltasche, Raumbereich für Öl
- 22: Abdeckung des Wellenendes der Zwischenwelle
- 23: Nut zur Ölführung
- 24: Ölkanal
- 25: Nut zur Ölführung
- 26: Abdeckung des Wellenendes der abtreibenden Welle
- 27: Ölkanal
- 28: Nut zur Ölführung
- 29: Nut zur Ölführung
- 30: Kühlrippen
- 31: Kühlrippen
- 32: seitlicher Gehäusedeckel mit wellenartiger Struktur zur Oberflächenvergrößerung
- 33: wellenartige Struktur zur Oberflächenvergrößerung

## Patentansprüche

1. Getriebevorrichtung, insbesondere Getriebe, mit einem Gehäuse
mit einem zentralen Gehäuseteil (14), in welchem ein erstes Lager (12), insbesondere unteres Lager (12), einer abtreibenden Welle (11) der Getriebevorrichtung aufgenommen ist,
**wobei** im zentralen Gehäuseteil (14) ein erster Kanal (10) vorgesehen ist, insbesondere ein aus radial und axial verlaufenden Bohrungsabschnitten zusammengesetzter Kanal (10),
wobei der erste Kanal (10) von einer ersten Seite der Getriebevorrichtrung zu einem Bereich einer Lageraufnahme des ersten Lagers (12) führt,
wobei die Getriebevorrichtung derart montierbar ist in einer Maschine oder Anlage, insbesondere Kühlturmanlage, dass die abtreibende Welle (11) nach unten, also in Gravitationsrichtung, herausragt aus dem Gehäuse der Getriebevorrichtung,
wobei das erste Lager (12) fettgeschmiert ist wobei eine Nachschmierung durch Einleitung von Fett in einen Mündungsbereich des ersten Kanals (10) an einer ersten Seite der Getriebevorrichtung ausführbar ist,
wobei die abtreibende Welle (11) über ein zweites Lager (16) gelagert ist, insbesondere dessen Lageraufnahme im zentralen Gehäuseteil (14) angeordnet ist,
**dadurch gekennzeichnet, dass** das zweite Lager (16) axial zwischen dem Mündungsbereich des ersten Kanals (10) auf der ersten Seite und dem (ersten) Lager (12) angeordnet ist,
wobei die erste Seite die Oberseite des Getriebevorrichtung ist,
wobei das zentrale Gehäuseteil (14) zweistückig ausgeführt ist, so dass ein oberes auf ein unteres Stück aufgesetzt und verbunden ist,
wobei der erste Kanal (10) vom oberen Stück ins untere Stück durchgeführt ist.

2. Getriebevorrichtung nach Anspruch 1,
**dadurch gekennzeichnet, dass**
im Mündungsberiech des ersten Kanals (10) ein Anschlussmittel (9) für Fettschmierung, insbesondere Druckschmierung, angeordnet ist.

3. Getriebevorrichtung nach mindestens einem der vorangegangenen Ansprüche,
**dadurch gekennzeichnet, dass**
**die** Lageraufnahme des ersten Lagers (12) im zentralen Gehäuseteil (14) auf der der ersten Seite gegenüberliegenden Seite angeordnet ist, also einen Abschnitt der dortigen Außenwand der Getriebevorrichtung umfasst.

4. Getriebevorrichtung nach mindestens einem der vorangegangenen Ansprüche,
**dadurch gekennzeichnet, dass**
das zentrale Gehäuseteil (14) zumindest ein wäteres Lager (5,15,13,17) von einer anderen Welle der Getriebevorrichtung aufnimmt,
und/oder dass
am oberen und/oder unteren Stück Zentriermittel angeordnet sind zum verbesserten Ausrichten des oberen zum unteren Stück.

5. Getriebevorrichtung nach mindestens einem der vorangegangenen Ansprüche,
**dadurch gekennzeichnet, dass**
im Gehäuse ein Öltank angeordnet ist, der zumindest teilweise begrenzt ist durch das zentrale Gehäuseteil (14).

6. Getriebevorrichtung nach Anspruch 5,
**dadurch gekennzeichnet, dass**
der Öltank durch das zentrale Gehäuseteil (14) und ein mit diesem dicht verbundenen Gehäusedeckel begrenzt ist.

7. Getriebevorrichtung nach Anspruch 5 oder 6,
**dadurch gekennzeichnet, dass**
der Öltank über einen zweiten Kanal (1, 2) mit einer Ölpumpe (19) verbunden ist, wobei der zweite Kanal (1,2) als Ausnehmung im zentrale Gehäuseteil (14) ausgebildet ist, insbesondere wobei der zweite Kanal (1,2) aus Bohrungsabschnitten (2), insbesondere axial, also parallel zur Achsrichtung der abtreibenden Welle (11), und hierzu transversal verlaufenden Bohrungsabschnitten (1), zusammengesetzt ist.

8. Getriebevorrichtung nach Anspruch 5, 6 oder 7,
**dadurch gekennzeichnet, dass**
im zentralen Gehäuseteil (14) dritte Kanäle ausgebildet sind, die von einem Getriebeinnenraum in den Öltank münden,
insbesondere wobei die dritten Kanäle jeweils aus Bohrungsabschnitten, insbesondere axial, also parallel zur Achsrichtung der abtreibenden Welle (11), und hierzu transversal verlaufenden Bohrungsabschnitten, zusammengesetzt sind.

9. Getriebevorrichtung nach Anspruch 7 oder 8,
**dadurch gekennzeichnet, dass**
im zentralen Gehäuseteil (14) ein vierter Kanal (3) von der Ölpumpe (19) an die Oberseite der Getriebevorrichtung verläuft, wobei der Mündungsbereich des vierten Kanals (3) von einem Lagerdeckel (8) abgedeckt ist, der auch die Stirnseite eines axialen Endbereichs der abtreibenden Welle (11) abdeckt, und in einen Raumbereich, insbesondere Öltasche (21), mündet, der zumindest vom zentralen Gehäuseteil (14) und vom Lagerdeckel (8) begrenzt ist.

10. Getriebevorrichtung nach Anspruch 9,
**dadurch gekennzeichnet, dass**
aus dem Raumbereich fünfte Kanäle zu zu schmierenden und/oder zu kühlenden Bereichen im Innenraum der Getriebevorrichtung führen, insbesondere zu einem Lager und/oder zu einem Bereich von miteinander im Eingriff stehenden Verzahnungen.

11. Getriebevorrichtung nach Anspruch 9 oder 10,
**dadurch gekennzeichnet, dass**
auf einer eintreibenden Welle (4) ein Lüfter (6) formschlüssig und/oder kraftschlüssig verbunden ist, dessen Kühlluftstrom am Lagerdeckel (8) vorbeiströmt, insbesondere wobei der Kühlluftstrom durch Ausnehmungen (7) eines Laternenflansch durchtritt, insbesondere in zur eintreibenden Welle (4) radialer Richtung, insbesondere wobei der Laternenflansch mit dem Gehäuse, insbesondere mit dem zentralen Gehäuseteil (14) der Getriebevorrichtung verbunden ist und an seiner von der Getriebevorrichtung abgewandten Seite mit einem Motorgehäuse verbunden ist.

12. Getriebevorrichtung nach Anspruch 5, 6, 7 oder 8,
**dadurch gekennzeichnet, dass**
das untere Stück des zentralen Gehäuseteils (14) an seiner Unterseite Kühlrippen (30, 31) aufweist, insbesondere wobei an einer den Öltank zumindest teilweise begrenzenden Wand des unteren Stücks Kühlrippen (30, 31) ausgebildet sind und/oder wobei an einer die Lageraufnahme zumindest teilweise begrenzenden Wand des unteren Stücks Kühlrippen (30, 31) ausgebildet sind.

13. Getriebevorrichtung nach mindestens einem der vorangegangenen Ansprüche,
**dadurch gekennzeichnet, dass**
an der Oberseite des oberen Stücks eine wellenartige Struktur als oberflächenvergrößernder Bereich ausgebildet ist,

14. Getriebevorrichtung nach Anspruch 9, 10, oder 11,
**dadurch gekennzeichnet, dass**
an der Außenseite des Lagerdeckels (8) eine wellenartige Struktur als oberflächenvergrößernder Bereich ausgebildet ist, die im Kühlluftstrom des Lüfters (6) angeordnet ist.

15. Getriebevorrichtung nach mindestens einem der vorangegangenen Ansprüche,
**dadurch gekennzeichnet, dass**
ein Gehäusedeckel mit dem unteren und dem oberen Stück des zentralen Gehäuseteils (14) verbunden ist, wobei der Gehäusedeckel seitlich angeordnet ist und/oder eine wellenartige Struktur als oberflächenvergrößernder Bereich aufweist,
und/oder dass
am zentralen Gehäuseteil (14), insbesondere an einem Eckbereich des quaderförmig ausgebildeten unteren Stücks, insbesondere am unteren Stück, ein Befestigungsbereich einstückig ausgeformt ist, der derart in seitlicher, also radialer Richtung, sich erstreckt, dass eine in axialer Richtung verlaufende durchgehende Bohrung eingebracht ist, so dass eine Verbindungsschraube in axialer Richtung durchführbar und mit einem festen Teil der die Getriebevorrichtung aufnehmenden Anlage oder Maschine verbindbar ist.

## Claims

1. Gearing device, in particular gearing, having a housing
having a central housing part (14), in which a first bearing (12), in particular a lower bearing (12), of an output shaft (11) of the gearing device is received,
wherein a first duct (10), in particular a duct (10) composed of radially and axially running bore sections, is provided in the central housing part (14),
wherein the first duct (10) leads from a first side of the gearing device to a region of a bearing receptacle of the first bearing (12),
wherein the gearing device is mountable in a machine or system, in particular a cooling tower system, in such a manner that the output shaft (11) protrudes downwards, i.e. in the direction of gravity, from the housing of the gearing device,
wherein the first bearing (12) is grease-lubricated, wherein a relubrication by introducing grease into a mouth region of the first duct (10) on a first side of the gearing device is performable,
wherein the output shaft (11) is mounted via a second bearing (16), in particular the bearing receptacle of which bearing is arranged in the central housing part (14),
**characterised in that** the second bearing (16) is arranged axially between the mouth region of the first duct (10) on the first side and the first bearing (12),
wherein the first side is the top side of the gearing device,
wherein the central housing part (14) is of two-piece design, so that an upper piece is placed on a lower piece and connected to it,
wherein the first duct (10) is led through from the upper piece into the lower piece.

2. Gearing device according to Claim 1,
**characterised in that**
a connecting means (9) for grease lubrication, in particular pressure lubrication, is arranged in the mouth region of the first duct (10).

3. Gearing device according to at least one of the preceding claims,
**characterised in that**
the bearing receptacle of the first bearing (12) is arranged in the central housing part (14) on the side opposite the first side, i.e. comprises a section of the outer wall of the gearing device there.

4. Gearing device according to at least one of the preceding claims,
**characterised in that**
the central housing part (14) receives at least one further bearing (5,15,13,17) of another shaft of the gearing device,
and/or **in that**
centring means are arranged on the upper and/or lower piece for improved alignment of the upper with respect to the lower piece.

5. Gearing device according to at least one of the preceding claims,
**characterised in that**
there is arranged in the housing an oil tank which is at least partly bounded by the central housing part (14).

6. Gearing device according to Claim 5,
**characterised in that**
the oil tank is bounded by the central housing part (14) and a housing cover leaktightly connected to the latter.

7. Gearing device according to Claim 5 or 6,
**characterised in that**
the oil tank is connected to an oil pump (19) via a second duct (1,2), wherein the second duct (1,2) is formed as a cutout in the central housing part (14), in particular wherein the second duct (1,2) is composed of bore sections (2), in particular running axially, i.e. parallel to the axial direction of the output shaft (11), and bore sections (1) running transversely thereto.

8. Gearing device according to Claim 5, 6 or 7,
**characterised in that**
third ducts are formed in the central housing part (14), which ducts lead from a gearing interior space into the oil tank,
in particular wherein the third ducts are each composed of bore sections, in particular running axially, i.e. parallel to the axial direction of the output shaft (11), and bore sections running transversely thereto.

9. Gearing device according to Claim 7 or 8,
**characterised in that**
in the central housing part (14) a fourth duct (3) runs from the oil pump (19) to the top side of the gearing device, wherein the mouth region of the fourth duct (3) is covered by a bearing cover (8), which also covers the end side of an axial end region of the output shaft (11), and opens into a spatial region, in particular an oil pocket (21), which is bounded at least by the central housing part (14) and by the bearing cover (8).

10. Gearing device according to Claim 9,
**characterised in that**
fifth ducts lead from the spatial region to regions in the interior space of the gearing device which are to be lubricated and/or cooled, in particular to a bearing and/or to a region of toothings in engagement with one another.

11. Gearing device according to Claim 9 or 10,
**characterised in that**
on an input shaft (4) a fan (6) is connected in a form-locking and/or force-locking manner, the cooling air flow of which flows past the bearing cover (8), in particular wherein the cooling air flow passes through cutouts (7) of a lantern flange, in particular in the radial direction with respect to the input shaft (4), in particular wherein the lantern flange is connected to the housing, in particular to the central housing part (14) of the gearing device and, on its side facing away from the gearing device, is connected to a motor housing.

12. Gearing device according to Claim 5, 6, 7 or 8,
**characterised in that**
the lower piece of the central housing part (14) has, on its underside, cooling ribs (30, 31), in particular wherein cooling ribs (30, 31) are formed on a wall of the lower piece at least partly bounding the oil tank and/or wherein cooling ribs (30, 31) are formed on a wall of the lower piece at least partly bounding the bearing receptacle.

13. Gearing device according to at least one of the preceding claims,
**characterised in that**
a wave-like structure is formed on the top side of the upper piece as a surface-increasing region.

14. Gearing device according to Claim 9, 10, or 11,
**characterised in that**
a wave-like structure is formed on the outside of the bearing cover (8) as a surface-increasing region, which structure is arranged in the cooling air flow of the fan (6).

15. Gearing device according to at least one of the preceding claims,
**characterised in that**
a housing cover is connected to the lower and to the upper piece of the central housing part (14), wherein the housing cover is laterally arranged and/or has a wave-like structure as a surface-increasing region,
and/or **in that**
a fastening region is integrally formed on the central housing part (14), in particular on a corner region of the cuboid-shaped lower piece, in particular on the lower piece, which fastening region extends in the lateral, i.e. radial direction, in such a manner that a through-bore running in the axial direction is formed, so that a connecting screw is able to be led through in the axial direction and connected to a fixed part of the system or machine receiving the gearing device.

## Revendications

1. Dispositif de transmission, en particulier boîte de vitesses, comportant un carter
avec une partie centrale de carter (14) dans laquelle est reçu un premier palier (12), en particulier un palier inférieur (12), d'un arbre de sortie (11) du dispositif de transmission,
un premier canal (10) étant prévu dans la partie centrale de carter (14), en particulier un canal (10) composé de sections d'alésage s'étendant radialement et axialement,
le premier canal (10) conduisant d'un premier côté du dispositif de transmission à une zone d'un logement de palier du premier palier (12),
le dispositif de transmission pouvant être monté dans une machine ou installation, en particulier une installation de tour de refroidissement, de façon que l'arbre de sortie (11) dépasse du carter du dispositif de transmission vers le bas, donc dans la direction de la gravité,
le premier palier (12) étant lubrifié à la graisse, un graissage pouvant être réalisé par introduction de graisse dans une zone de débouché du premier canal (10) d'un premier côté du dispositif de transmission,
l'arbre de sortie (11) étant supporté par un deuxième palier (16), en particulier dont le logement de palier est disposé dans la partie centrale de carter (14),
**caractérisé en ce que**
le deuxième palier (16) est disposé axialement entre la zone de débouché du premier canal (10) du premier côté et le premier palier (12),
le premier côté étant le côté supérieur du dispositif de transmission,
la partie centrale de carter (14) étant réalisée en deux pièces, de sorte qu'une pièce supérieure est posée sur une pièce inférieure et reliée à celle-ci,
le premier canal (10) passant de la pièce supérieure dans la pièce inférieure.

2. Dispositif de transmission selon la revendication 1,
**caractérisé en ce**
**qu'**un moyen de raccordement (9) pour la lubrification à la graisse, en particulier la lubrification sous pression, étant disposé dans la zone de débouché du premier canal (10).

3. Dispositif de transmission selon au moins l'une des revendications précédentes,
**caractérisé en ce**
**que** le logement de palier du premier palier (12) dans la partie centrale de carter (14) est disposé du côté opposé au premier côté, donc comprend une section de la paroi extérieure correspondante du dispositif de transmission.

4. Dispositif de transmission selon au moins l'une des revendications précédentes,
**caractérisé en ce**
**que** la partie centrale de carter (14) reçoit au moins un autre palier (5, 15, 13, 17) d'un autre arbre du dispositif de transmission,
et/ou
**que** des moyens de centrage sont disposés sur la pièce supérieure et/ou inférieure pour améliorer l'alignement de la pièce supérieure par rapport à la pièce inférieure.

5. Dispositif de transmission selon au moins l'une des revendications précédentes,
**caractérisé en ce**
**qu'**un réservoir d'huile est disposé dans le carter, lequel réservoir d'huile est limité au moins partiellement par la partie centrale de carter (14).

6. Dispositif de transmission selon la revendication 5,
**caractérisé en ce**
**que** le réservoir d'huile est limité par la partie centrale de carter (14) et un couvercle de carter relié à celle-ci de manière étanche.

7. Dispositif de transmission selon la revendication 5 ou 6,
**caractérisé en ce**
**que** le réservoir d'huile est relié par un deuxième canal (1, 2) à une pompe à huile (19), le deuxième canal (1, 2) étant réalisé sous la forme d'un évidement dans la partie centrale de carter (14), en particulier le deuxième canal (1, 2) étant composé de sections d'alésage (2) s'étendant en particulier axialement, donc parallèlement à la direction axiale de l'arbre de sortie (11), et de sections d'alésage (1) s'étendant transversalement à celle-ci.

8. Dispositif de transmission selon la revendication 5, 6 ou 7,
**caractérisé en ce**
**que** des troisièmes canaux, qui débouchent d'un espace intérieur de la boîte de vitesses dans le réservoir d'huile, sont formés dans la partie centrale de carter (14),
les troisièmes canaux étant en particulier composés chacun de sections d'alésage s'étendant en particulier axialement, donc parallèlement à la direction axiale de l'arbre de sortie (11), et de sections d'alésage s'étendant transversalement à celle-ci.

9. Dispositif de transmission selon la revendication 7 ou 8,
**caractérisé en ce**
**qu'**un quatrième canal (3) s'étend dans la partie centrale de carter (14) de la pompe à huile (19) au côté supérieur du dispositif de transmission, la zone de débouché du quatrième canal (3) étant recouverte par un couvercle de palier (8) qui recouvre aussi la face frontale d'une zone d'extrémité axiale de l'arbre de sortie (11), et débouche dans une zone d'espace, en particulier une poche d'huile (21), qui est limitée au moins par la partie centrale de carter (14) et le couvercle de palier (8).

10. Dispositif de transmission selon la revendication 9,
**caractérisé en ce**
**que** de la zone d'espace, des cinquièmes canaux conduisent à des zones à lubrifier et/ou à refroidir dans l'espace intérieur du dispositif de transmission, en particulier à un palier et/ou à une zone de dentures en prise les unes avec les autres.

11. Dispositif de transmission selon la revendication 9 ou 10,
**caractérisé en ce**
**qu'**un ventilateur (6) est relié par complémentarité de forme et/ou par force sur un arbre d'entrée (4), dont le courant d'air de refroidissement passe sur le couvercle de palier (8), en particulier le courant d'air de refroidissement passant à travers des évidements (7) d'une bride de lanterne, en particulier dans une direction radiale par rapport à l'arbre d'entrée (4), en particulier la bride de lanterne étant reliée au carter, en particulier à la partie centrale de carter (14) du dispositif de transmission, et, de son côté éloigné du dispositif de transmission, reliée à un carter de moteur.

12. Dispositif de transmission selon la revendication 5, 6, 7 ou 8,
**caractérisé en ce**
**que** la pièce inférieure de la partie centrale de carter (14) présente des ailettes de refroidissement (30, 31) sur son côté inférieur, en particulier des ailettes de refroidissement (30, 31) étant formées sur une paroi de la pièce inférieure qui délimite au moins partiellement le réservoir d'huile et/ou des ailettes de refroidissement (30, 31) étant formées sur une paroi de la pièce inférieure qui délimite au moins partiellement le logement de palier.

13. Dispositif de transmission selon au moins l'une des revendications précédentes, **caractérisé en ce**
**qu'**une structure ondulée est formée sur le côté supérieur de la pièce supérieure en guise de zone d'augmentation de la surface.

14. Dispositif de transmission selon la revendication 9, 10 ou 11,
**caractérisé en ce**
**qu'**une structure ondulée est formée sur le côté extérieur du couvercle de palier (8) en guise de zone d'augmentation de la surface, laquelle est disposée dans le courant d'air de refroidissement du ventilateur (6).

15. Dispositif de transmission selon au moins l'une des revendications précédentes,
**caractérisé en ce**
**qu'**un couvercle de carter est relié à la pièce inférieure et à la pièce supérieure de la partie centrale de carter (14), le couvercle de carter étant disposé sur le côté et/ou présentant une structure ondulée en guise de zone d'augmentation de la surface,
et/ou
**qu'**une zone de fixation est formée d'une seule pièce sur la partie centrale de carter (14), en particulier sur une zone d'angle de la pièce inférieure de forme parallélépipédique, en particulier sur la pièce inférieure, laquelle s'étend dans la direction latérale, donc radiale, de façon à ménager un alésage continu s'étendant en direction axiale, de sorte qu'une vis d'assemblage peut être introduite en direction axiale et reliée à une partie fixe de l'installation ou de la machine recevant le dispositif de transmission.
